# EUROPEAN PATENT SPECIFICATION

(11) **EP 3 577 371 B1**
(45) Date of publication and mention of the grant of the patent: **20.10.2021**
(21) Application number: 18713048.9
(22) Date of filing: 18.01.2018
(51) Int. Cl.: F16K 1/22, F16K 1/36, F16K 25/00, F16K 27/02, B22F 3/105, B22F 7/06, B33Y 80/00, B22F 10/20

(54) **CONTROL VALVES HAVING INTEGRAL TRIM**
STEUERVENTILE MIT INTEGRALER ARMATUR
SOUPAPES DE COMMANDE À GARNITURE INTÉGRALE

(30) Priority: 02.02.2017 US 201715423133
(43) Date of publication of application: 11.12.2019
(73) Proprietor: Fisher Controls International LLC, Marshalltown, IA 50158 (US)
(72) Inventor: GABRIEL, Thomas, N., Marshalltown, IA 50158 (US); MCCARTY, Michael, Marshalltown, IA 50158 (US)
(74) Representative: Petraz, Gilberto Luigi
(86) International application number: PCT/US2018/014175
(87) International publication number: WO 2018/144229

(56) References cited:
- EP-A1- 0 482 272
- EP-A1- 1 200 721
- EP-A1- 2 639 323
- EP-A1- 2 851 587
- EP-A1- 3 110 713
- WO-A1-2010/116221
- DE-A1-102015 202 417
- DE-B- 1 191 646
- FR-A- 1 570 052
- FR-A1- 2 559 096
- IT-A1- PR20 110 045
- JP-A- H03 208 617
- US-A- 4 176 689
- US-A- 4 611 374

## Description

### FIELD OF THE DISCLOSURE

This disclosure relates generally to control valves and, more specifically, to control valves having integral trim.

### BACKGROUND

Conventional control valves include individual trim components that are inserted into the body of the valve during a valve assembly process. Proper loading and/or assembly of the individual trim components is a complex process that gives rise to numerous manufacturing and assembly concerns. For example, tolerance stack-ups must be accounted for during the manufacturing of the individual trim components and the subsequent assembly thereof to ensure that the individual trim components properly fit within and/or are properly positioned within the assembled control valve. Document JP H03208617 A describes manufacture of integral type globe valve. Document FR 1570052 A discloses a valve assembly and method of making the same. Document US 4611374 A describes a method for manufacturing a check valve contained within a tube. Document EP 0482272 A1 describes a valve unit. Document EP 1200721 A1 discloses another known valve. Document EP 3110713 A1 describes a reclosable stopper revealing a first opening. DE 1191646 describes a control valve which indicates the use of a single-piece housing with an integral seat and a valve plug with a stem.

### SUMMARY

Control valves having integral trim are disclosed herein. A control valve is defined in the annexed claim 1.

Dependent claims show other advantageous features of the present control valve.

The disclosure also relates to a method of manufacturing a control valve as defined in the annexed claim 8. Dependent claims show other advantageous features of the present method.

### BRIEF DESCRIPTION OF THE DRAWINGS

FIG. 1 is a cross-sectional view of a known control valve, not according to the invention.
FIG. 2 is a cross-sectional view of a first example control valve according to the invention having an integral trim.
FIG. 3 is a cross-sectional view of a second example control valve having example integral trim.
FIG. 4 is a cross-sectional view of a butterfly valve not according to the invention having a single-piece valve body and a single-piece disk-shaft member.

Certain examples are shown in the above-identified figures and described in detail below. The figures are not necessarily to scale and certain features and certain views of the figures may be shown exaggerated in scale or in schematic for clarity and/or conciseness.

### DETAILED DESCRIPTION

Conventional control valves include individual trim components that are inserted into the body of the valve during a valve assembly process. Examples of such individual trim components may include a seat ring, a seat ring gasket, a cage, a plug, a spiral wound gasket, a shim gasket, a bonnet gasket and a bonnet, among other trim components. The proper loading and/or assembly of such individual trim components is a complex process that gives rise to numerous manufacturing and assembly concerns, particularly when a relatively large number of individual trim components are to be inserted and assembled into the valve body.

For example, tolerance stack-ups must be accounted for during the manufacturing of the individual trim components and the subsequent assembly thereof to ensure that the individual trim components properly fit within and/or are properly positioned within the assembled control valve. Failure to properly load the individual trim components may result in one or more leak path(s) forming within the control valve, thereby creating a possibility that a process fluid passing though the control valve may contaminate an external environment via the leak path(s), or vice-versa.

As another example, the variability associated with the manufacturing and assembly processes of such conventional control valves grows in magnitude as the number of individual trim parts to be inserted into the body of the valve increases. The time associated with the manufacturing and assembly processes likewise grows as a result of an increased number of individual trim components. Furthermore, each individual trim component is a serviceable component that may require repair and/or replacement upon failure of the component. Thus, as the number of individual trim components to be assembled into the body of the valve increases, so too does the possibility that at least one serviceable component of the valve will require servicing during the lifetime of the valve.

Unlike the conventional control valves described above that include relatively large numbers of individual trim components, the control valves disclosed herein have one or more integral trim component(s) formed as a single-piece component with a body and/or a bonnet of the valve. As used herein in reference to a component (e.g., a valve body, a valve bonnet, etc.), the term "single-piece" refers generally to a unitary, one-piece component that is free of joints held together and/or sealed via welding or other mechanical fastening and/or sealing means. A single-piece component may be formed and/or manufactured by, for example, casting or additive manufacturing. As used herein, the term "additive manufacturing" refers generally to a process by which three-dimensional design data (e.g., a computer-aided design (CAD) file) is used in conjunction with a controllable laser to fabricate a single-piece component by depositing successive layers of material on top of one another. For example, rather than milling and/or machining a component from a solid block of material, additive manufacturing fabricates the component layer by layer using one or more material(s) in the form of a fine powder (e.g., a metallic powder, a plastic powder, a composite powder, etc.) capable of being solidified by application of the laser thereto.

Implementation of a control valve having one or more integral trim component(s) reduces the number of individual trim components to be inserted into the body of the valve during the valve assembly process. For example, implementation of a control valve having a single-piece valve body including an integral seat and an integral bonnet eliminates the need for an individual seat ring, an individual seat ring gasket, an individual bonnet, an individual spiral wound gasket, an individual shim gasket and an individual bonnet gasket in the control valve.

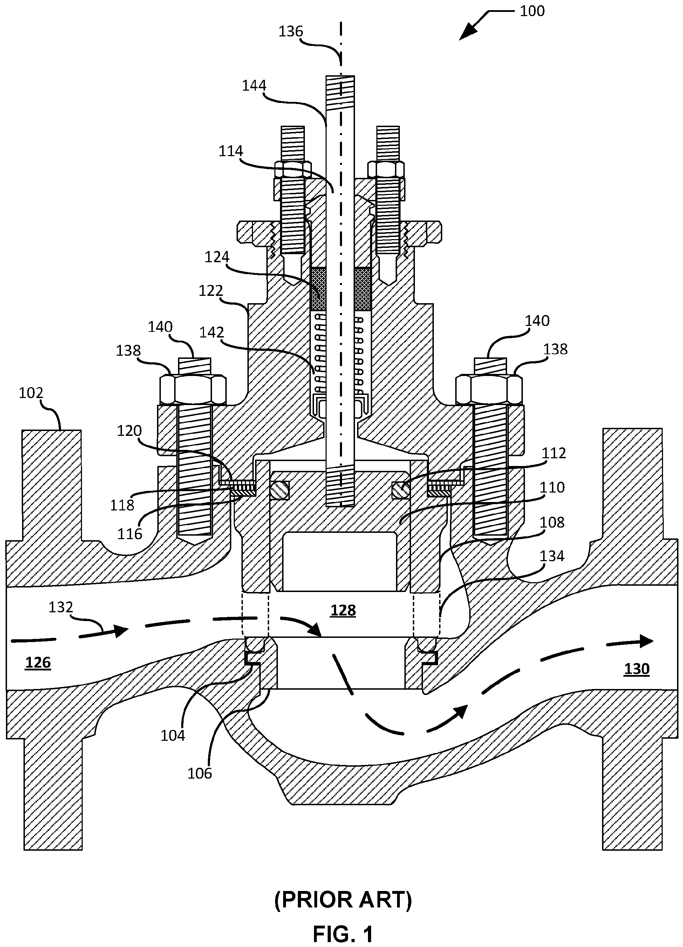

Reducing the number of individual trim components to be inserted and assembled into the body of a valve advantageously reduces the variability associated with the manufacturing and assembly processes of the valve, reduces the extent of time associated with the manufacturing and assembly processes of the valve, and provides for a more robust valve. Reducing the number of individual trim components to be inserted and assembled into the body of the valve also advantageously reduces the number of joints present in the valve, and accordingly reduces the number of potential leakage paths of the valve. Reducing the number of individual trim components to be inserted and assembled into the body of the valve also advantageously reduces the number of serviceable components of the valve, thereby reducing the possibility that at least one serviceable component of the valve will require servicing during the lifetime of the valve. Before describing the details of example control valves having integral trim components, a description of a known control valve is provided in connection with FIG. 1.

FIG. 1 is a cross-sectional view of a known control valve 100, not according to the invention. The control valve 100 of FIG. 1 includes a valve body 102, a seat ring gasket 104, a seat ring 106, a cage 108, a plug 110, a plug seal 112, a stem 114, a spiral wound gasket 116, a shim gasket 118, a bonnet gasket 120, a bonnet 122, and packing 124, each of which is an individual component of the control valve 100.

The valve body 102 includes an inlet 126, a cavity 128, and an outlet 130. A fluid flowing through the valve body 102 and/or, more generally, through the control valve 100, enters the inlet 126, passes through the cavity 128, and exits the outlet 130 as indicated by the pathway 132 shown in FIG. 1. The seat ring gasket 104, the seat ring 106, the cage 108, the plug 110, the plug seal 112, the stem 114, the spiral wound gasket 116, the shim gasket 118, and the bonnet gasket 120 of the control valve 100 are loaded and/or positioned (e.g., individually loaded and/or positioned) within the cavity 128 of the valve body 102 in conjunction with assembly of the control valve 100.

During assembly of the control valve 100, the seat ring gasket 104 and the seat ring 106 are the first of the individual trim components of the control valve 100 to be inserted into the cavity 128 of the valve body 102. The seat ring gasket 104 fills space that may exist between the valve body 102 and the seat ring 106 (e.g., space resulting from manufacturing irregularities of the valve body 102 and/or the seat ring 106), thereby preventing process fluid from leaking between the valve body 102 and the seat ring 106. The seat ring 106 is configured to mate with the plug 110 of the control valve 100 when the plug 110 and/or, more generally, the control valve 100, is in a closed position. As shown in FIG. 1, the plug 110 and/or, more generally, the control valve 100, is in an open position.

The cage 108 is the next of the individual trim components of the control valve 100 to be inserted into the cavity 128 of the valve body 102. When properly loaded into the cavity 128, the cage 108 is compressed against the seat ring 106, and the seat ring 106 is compressed against the seat ring gasket 104. The cage 108 includes a plurality of windows 134 (e.g., apertures) arranged in a spaced relationship around the perimeter of the cage 108. Fluid flowing through the control valve 100 passes from the inlet 126, through one or more of the windows 134 of the cage 108, through the seat ring 106, and toward the outlet 130 of the control valve 100. The arrangement and/or orientation of the windows 134 about the perimeter of the cage 108 impacts the flow characteristics of the fluid passing through the control valve 100, as well as the rate at which the fluid passes through the control valve 100.

The plug 110, the plug seal 112, and the stem 114 are the next of the individual trim components of the control valve 100 to be inserted into the cavity 128 of the valve body 102. The plug 110 and plug seal 112 are loaded within an interior surface of the cage 108. The plug seal 112 prevents process fluid from leaking between the cage 108 and the plug 110. The stem 114 is coupled to the plug 110 by, for example, screwing a threaded end of the stem 114 into a threaded bore of the plug 110. The plug 110 and the stem 114 are movable and/or slidable within the cage 108 and relative to the seat ring 106 of the control valve 100 along a longitudinal axis 136 defined by the stem 114. As the plug 110 moves and/or slides downward from its current position shown in FIG. 1 past the windows 134 of the cage 108, fluid passing through the control valve 100 is restricted and/or blocked. The plug 110 is configured to mate with the seat ring 106 to fully close off the fluid pathway 132 shown in FIG. 1.

The spiral wound gasket 116, the shim gasket 118 and the bonnet gasket 120 are the next of the individual trim components of the control valve 100 to be inserted into the cavity 128 of the valve body 102. The spiral wound gasket 116, the shim gasket 118 and the bonnet gasket 120 fill space that may exist between the valve body 102, the cage 108 and/or the bonnet 122 of the control valve 100, thereby preventing process fluid from leaking between the valve body 102, the cage 108 and/or the bonnet 122.

The bonnet 122 of FIG. 1 is removably coupled to the valve body 102 via a plurality of nuts 138 and bolts and/or threaded studs 140. When the bonnet 122 is coupled to the valve body 102 (e.g., as shown in FIG. 1), the bonnet 122 confines the seat ring gasket 104, the seat ring 106, the cage 108, the plug 110, the plug seal 112, the spiral wound gasket 116, the shim gasket 118 and the bonnet gasket 120 within the cavity 128 of the valve body 102. The stem 114 passes through a cavity 142 of the bonnet 122, and a portion 144 of the stem 114 protrudes externally from the cavity 142 of the bonnet 122. The packing 124 (e.g., packing rings, etc.) loaded and/or inserted into the cavity 142 of the bonnet 122 supports the stem 114 within the cavity 142 of the bonnet 122 and prevents process fluid from leaking through the cavity 142 of the bonnet 122 between the stem 114 and the bonnet 122. When the bonnet 122 is properly coupled to the valve body 102, the stem 114 is movable and/or slidable along the longitudinal axis 136 relative to the seat ring 106 of the control valve 100.

In contrast to the known control valve 100 of FIG. 1 including the individual trim components described above, the example control valves described herein include one or more integral trim components formed as part of a single-piece valve body and/or a single-piece valve bonnet.

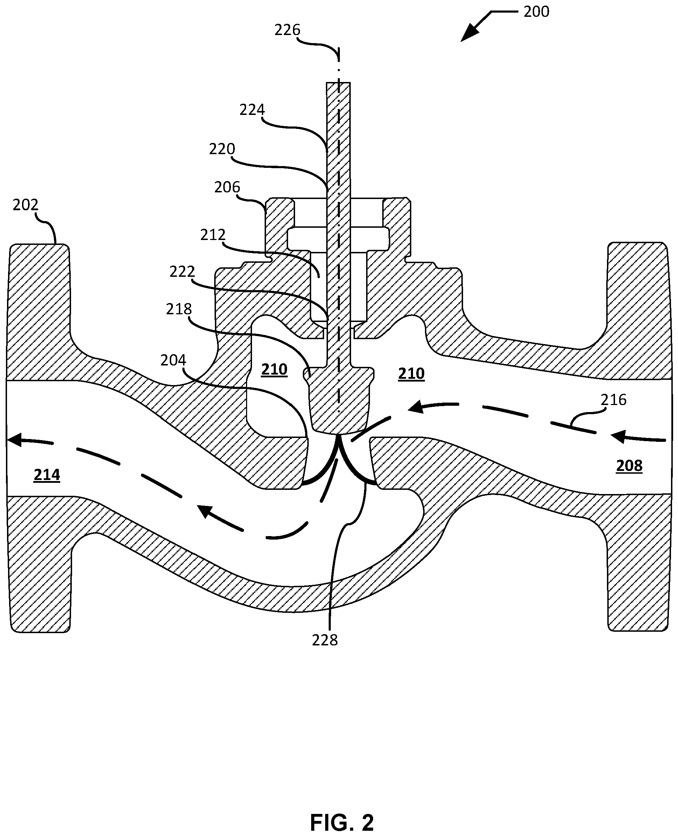

FIG. 2 is a cross-sectional view of a first example control valve 200 according to the invention having an example integral trim. The control valve 200 of FIG. 2 includes an example single-piece valve body 202 having an example integral seat 204 and an example integral bonnet 206. Formation of the integral seat 204 and the integral bonnet 206 as part of the single-piece valve body 202 of FIG. 2 advantageously eliminates the need for an individual seat ring, an individual seat ring gasket, an individual spiral wound gasket, an individual shim gasket, an individual bonnet gasket, and an individual bonnet in the control valve 200 of FIG. 2.

The single-piece valve body 202 of FIG. 2 includes an example inlet 208, a first example cavity 210, a second example cavity 212 and an example outlet 214. The first cavity 210 and the second cavity 212 result from the integral bonnet 206 being formed as part of the single-piece valve body 202. A fluid flowing through the single-piece valve body 202 and/or, more generally, through the control valve 200, enters the inlet 208, passes through the first cavity 210, and exits the outlet 214 as indicated by the example pathway 216 shown in FIG. 2. In other examples, the identification of the inlet 208 and the outlet 214 may be reversed such that a fluid flowing through the single-piece valve body 202 and/or, more generally, through the control valve 200, travels in a direction opposite to that of the pathway 216 illustrated in FIG. 2.

In the illustrated example of FIG. 2, the control valve 200 also includes an example plug 218 irremovably located within the single-piece valve body 202. As used herein in reference to a first component being located within a second component (e.g., a plug being located within a valve body), the term "irremovably located" means the first component is not capable of being removed from the second component absent destructive manipulation of the first component and/or the second component. The plug 218 of FIG. 2 is shaped to control a flow of a fluid passing through control valve 200 along the fluid pathway 216. The plug 218 is configured to mate with the integral seat 204 of the control valve 200 when the plug 218 and/or, more generally, the control valve 200, is in a closed position. As shown in FIG. 2, the plug 218 and/or, more generally, the control valve 200, is in an open position. Although the example of FIG. 2 illustrates a specific shape of the plug 218 and the integral seat 204 of the control valve 200, plugs and integral seats of the control valves described herein may be of any shape, arrangement and/or orientation so long as the plug is configured to mate with the integral seat when the plug and/or, more generally, the control valve 200, is in a closed position.

The control valve 200 of FIG. 2 also includes an example stem 220 integrally formed with the plug 218 as an example single-piece plug-stem member 222. The stem 220 of the single-piece plug-stem member 222 passes through the second cavity 212 defined by the integral bonnet 206 of the single-piece valve body 202. An example portion 224 of the stem 220 of the single-piece plug-stem member 222 protrudes externally from the second cavity 212 of the single-piece valve body 202. Packing (not shown) may be loaded and/or inserted into the second cavity 212 to support the stem 220 of the single-piece plug-stem member 222 within the second cavity 212, and to prevent process fluid from leaking through the second cavity 212 of the single-piece valve body 202 between the stem 220 and the integral bonnet 206. The single-piece plug-stem member 222 is movable and/or slidable within the single-piece valve body 202 relative to the integral seat 204 of the single-piece valve body 202 along an example longitudinal axis 226 defined by the stem 220 of the single-piece plug-stem member 222. The plug 218 of the single-piece plug-stem member 222 is configured to mate with the integral seat 204 of the single-piece valve body 202 to fully close off the fluid pathway 216 shown in FIG. 2.

In the illustrated example of FIG. 2, the control valve 200 also includes example breakable supports 228 (e.g., one or more low-strength lattice structures) integrally formed with the plug 218 and the single-piece valve body 202. The breakable supports 228 enable and/or stabilize the formation of the plug 218 during an additive manufacturing process used to fabricate the control valve 200. In the illustrated example of FIG. 2, the breakable supports 228 removably couple the plug 218 to the single-piece valve body 202. The breakable supports 228 are separable from the plug 218 and the single-piece valve body 202 by, for example, twisting of the plug 218 relative to the single-piece valve body 202 and/or moving the plug 218 relative to (e.g., toward or away from) the integral seat 204 of the single-piece valve body 202. The breakable supports 228 are removable (e.g., via the inlet 208 or the outlet 214 of FIG. 2) from the single-piece valve body 202 upon the breakable supports 228 being separated from the plug 218 and the single-piece valve body 202. Although the example of FIG. 2 illustrates a specific number of breakable supports located at specific locations within the control valve 200, the control valves described herein may include any number (e.g., 0, 1, 2, 3, etc.) of breakable supports located, arranged and/or oriented at any location(s) within the control valve.

In the illustrated example of FIG. 2, the control valve 200 (e.g., the single-piece valve body 202, the single-piece plug-stem member 222, and the breakable supports 228) is formed and/or fabricated via one or more additive manufacturing process(es). For example, the control valve 200 may be formed utilizing a selective laser sintering (SLS) process. Additive manufacturing enables the plug 218 and/or the single-piece plug-stem member 222 of FIG. 2 to be formed such that the plug 218 is irremovably located within the single-piece valve body 202 of FIG. 2. Positioning the plug 218 in this manner would be prohibitively difficult, if not impossible, via conventional fabrication processes such as milling, molding, casting, etc.

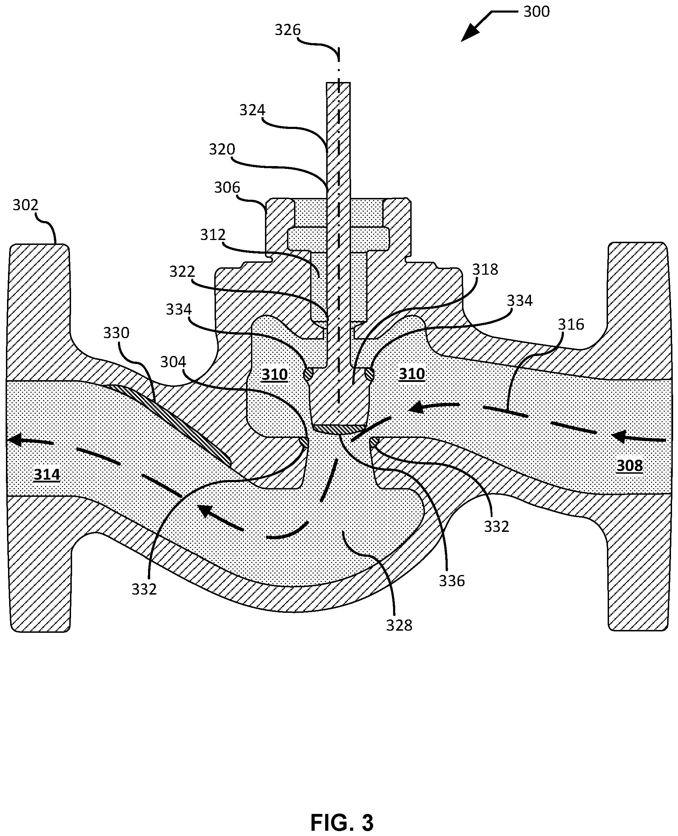

FIG. 3 is a cross-sectional view of a second example control valve 300 having example integral trim. The control valve 300 of FIG. 3 includes an example single-piece valve body 302 having an example integral seat 304 and an example integral bonnet 306. Formation of the integral seat 304 and the integral bonnet 306 as part of the single-piece valve body 302 of FIG. 3 advantageously eliminates the need for an individual seat ring, an individual seat ring gasket, an individual spiral wound gasket, an individual shim gasket, an individual bonnet gasket, and an individual bonnet in the control valve 300 of FIG. 3.

The single-piece valve body 302 of FIG. 3 includes an example inlet 308, a first example cavity 310, a second example cavity 312 and an example outlet 314. The first cavity 310 and the second cavity 312 result from the integral bonnet 306 being formed as part of the single-piece valve body 302. A fluid flowing through the single-piece valve body 302 and/or, more generally, through the control valve 300, enters the inlet 308, passes through the first cavity 310, and exits the outlet 314 as indicated by the example pathway 316 shown in FIG. 3. In other examples, the identification of the inlet 308 and the outlet 314 may be reversed such that a fluid flowing through the single-piece valve body 302 and/or, more generally, through the control valve 300, travels in a direction opposite to that of the pathway 316 illustrated in FIG. 3.

In the illustrated example of FIG. 3, the control valve 300 also includes an example plug 318 irremovably located within the single-piece valve body 302. The plug 318 of FIG. 3 is shaped to control a flow of a fluid passing through control valve 300 along the fluid pathway 316. The plug 318 is configured to mate with the integral seat 304 of the control valve 300 when the plug 318 and/or, more generally, the control valve 300, is in a closed position. As shown in FIG. 3, the plug 318 and/or, more generally, the control valve 300, is in an open position. Although the example of FIG. 3 illustrates a specific shape of the plug 318 and the integral seat 304 of the control valve 300, plugs and integral seats of the control valves described herein may be of any shape, arrangement and/or orientation so long as the plug is configured to mate with the integral seat when the plug and/or, more generally, the control valve 300, is in a closed position.

The control valve 300 of FIG. 3 also includes an example stem 320 integrally formed with the plug 318 as an example single-piece plug-stem member 322. The stem 320 of the single-piece plug-stem member 322 passes through the second cavity 312 defined by the integral bonnet 306 of the single-piece valve body 302. An example portion 324 of the stem 320 of the single-piece plug-stem member 322 protrudes externally from the second cavity 312 of the single-piece valve body 302. Packing (not shown) may be loaded and/or inserted into the second cavity 312 to support the stem 320 of the single-piece plug-stem member 322 within the second cavity 312, and to prevent process fluid from leaking through the second cavity 312 of the single-piece valve body 302 between the stem 320 and the integral bonnet 306. The single-piece plug-stem member 322 is movable and/or slidable within the single-piece valve body 302 relative to the integral seat 304 of the single-piece valve body 302 along an example longitudinal axis 326 defined by the stem 320 of the single-piece plug-stem member 322. The plug 318 of the single-piece plug-stem member 322 is configured to mate with the integral seat 304 of the single-piece valve body 302 to fully close off the fluid pathway 316 shown in FIG. 3.

In the illustrated example of FIG. 3, example non-sintered material 328 is positioned within the inlet 308, the first cavity 310, the second cavity 312, and the outlet 314 of the single-piece valve body 302. The non-sintered material 328 supports (e.g., provides a base and/or lateral support for) the formation of the plug 318, the stem 320, and/or the single-piece plug-stem member 322 in the single-piece valve body 302. The non-sintered material 328 is removable from the inlet 308, the first cavity 310, the second cavity 312, and the outlet 314 of the single-piece valve body 302 following completion of the manufacturing process utilized to fabricate the control valve 300 of FIG. 3.

The control valve 300 of FIG. 3 also includes hardened surface layers integrally formed on underlying surfaces of the control valve 300. The hardened surface layers increase the resistance of the control valve 300 to wear resulting from fluid passing though the control valve 300. For example, hardened surface layers may be positioned on the integral seat 304 and/or the plug 318 of the control valve 300, and/or along one or more guiding surface(s) and/or high velocity area(s) of the single-piece valve body 302 of the control valve 300 of FIG. 3. In the illustrated example of FIG. 3, a first example hardened surface layer 330 is formed on a portion of an upper interior wall surface of an inlet portion of the single-piece valve body 302. A second example hardened surface layer 332 is formed on a portion of an interior wall surface of the integral seat 304 of the single-piece valve body 302. A third example hardened surface layer 334 is formed on an upper portion of an exterior surface of the plug 318 of the single-piece valve body 302. A fourth example hardened surface layer 336 is formed on a lower portion of an exterior surface of the plug 318 of the single-piece valve body 302.

In the illustrated example of FIG. 3, each of the first, second, third and fourth hardened surface layers 330, 332, 334, 336 is/are formed of a material having a respective hardness value that exceeds a corresponding hardness value of the material from which the corresponding underlying surface layer is formed. For example, each of the first, second, third and fourth hardened surface layers 330, 332, 334, 336 may be formed of an Alloy 6 material, and each of the corresponding underlying surface layers (e.g., the single-piece valve body 302, the plug 318, the stem 320, and/or the single-piece plug-stem member 322) may be formed of a Grade 316 Stainless Steel material. Although the example of FIG. 3 illustrates a specific number of hardened surface layers located in specific locations within the control valve 300, the control valves described herein may include any number (e.g., 0, 1, 2, 3, etc.) of hardened surface layers located, arranged and/or oriented at any location(s) within the control valve.

In the illustrated example of FIG. 3, the control valve 300 (e.g., the single-piece valve body 302, the single-piece plug-stem member 322, and the non-sintered material 328) is formed and/or fabricated via one or more additive manufacturing process(es). For example, the control valve 300 may be formed utilizing a selective laser sintering (SLS) process and/or a hybrid directed energy deposition process. Additive manufacturing enables the plug 318 and/or the single-piece plug-stem member 322 of FIG. 3 to be formed such that the plug 318 is irremovably located within the single-piece valve body 302 of FIG. 3. Positioning the plug 318 in this manner would be prohibitively difficult, if not impossible, via conventional fabrication processes such as milling, molding, casting, etc.

Recent advancements in additive manufacturing enable the deposition of multiple, different materials during a single build and/or print of the manufacturing process. For example, additive manufacturing enables a cobalt/chrome alloy (e.g., Alloy 6) to be deposited and/or formed over stainless steel (e.g., Grade 316 Stainless Steel). In some examples, the additive manufacturing process(es) used to fabricate the single-piece valve body 302 of FIG. 3 may result in the single-piece valve body 302, the integral seat 304, the integral bonnet 306, the plug 318, the stem 320, and the single-piece plug-stem member 322 being formed of the same material. In such examples, the first, second, third and fourth hardened surface layers 330, 332, 334, 336 of the single-piece valve body 302 may be formed of one or more material(s) that differ from (e.g., provide greater hardness relative to) the material used to form the single-piece valve body 302, the integral seat 304, the integral bonnet 306, the plug 318, the stem 320 and the single-piece plug-stem member 322 of the single-piece valve body 302. In other examples, respective ones of the single-piece valve body 302, the integral seat 304, the integral bonnet 306, the plug 318 and the stem 320 may be formed via one or more different material(s).

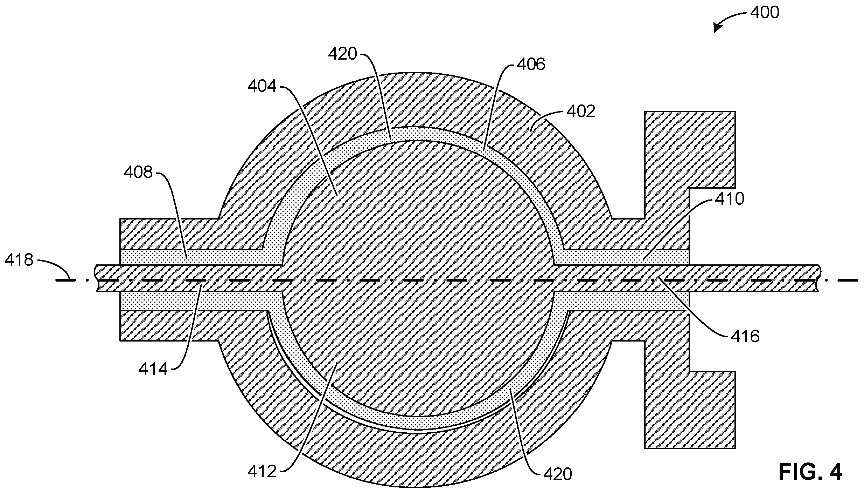

FIG. 4 is a cross-sectional view of a butterfly valve 400 not according to the invention having a single-piece valve body 402 and a single-piece disk-shaft member 404. The single-piece disk-shaft member 404 of FIG. 4 is irremovably located within the single-piece valve body 402 of FIG. 4. The single-piece valve body 402 of FIG. 4 defines an example disk cavity 406, a first example shaft cavity 408, and a second example shaft cavity 410. The single-piece disk-shaft member 404 of FIG. 4 includes an example disk 412, a first example shaft 414, and a second example shaft 416. The first shaft 414 and the second shaft 416 are integrally formed with the disk 412 of the single-piece disk-shaft member 404 of FIG. 4. Formation of the single-piece disk-shaft member 404 within the single-piece valve body 402 of FIG. 4 advantageously eliminates the need for a multi-piece valve body, an individual disk, and/or individual shafts in the butterfly valve 400 of FIG. 4.

In the illustrated example of FIG. 4, not according to the invention, the disk 412 of the single-piece disk-shaft member 404 is positioned within the disk cavity 406 of the single-piece valve body 402. The disk cavity 406 of the single-piece valve body 402 is configured to receive a disk seal (not shown) to be added to the butterfly valve 400 of FIG. 4 following the fabrication of the single-piece valve body 402 and the single-piece disk-shaft member 404. The disk cavity 406 of the single-piece valve body 402 is further configured to permit a fluid to flow through the disk cavity 406 when the disk 412 of the single-piece disk-shaft member 404 is not closed (e.g., when the disk 412 of the single-piece disk-shaft member 404 is not engaged with the disk seal of the butterfly valve 400). The disk 412 is configured to mate with the disk seal of the butterfly valve 400 to close and/or shut off the flow of fluid through the disk cavity 406 when the disk 412 and/or, more generally, the butterfly valve 400, is in a closed position.

In the illustrated example of FIG. 4, not according to the invention, the first shaft 414 of the single-piece disk-shaft member 404 is positioned within the first shaft cavity 408 of the single-piece valve body 402, and the second shaft 416 of the single-piece disk-shaft member 404 is positioned within the second shaft cavity 410 of the single-piece valve body 402. The first shaft cavity 408 and the second shaft cavity 410 are respectively configured to receive corresponding ones of first and second shaft bearings (not shown) to be added to the butterfly valve 400 of FIG. 4 following the fabrication of the single-piece valve body 402 and the single-piece disk-shaft member 404. The disk 412, the first shaft 414, the second shaft 416 and/or, more generally, the single-piece disk-shaft member 404 is/are rotatable within the single-piece valve body 402 about an example axis of rotation 418 of FIG. 4.

In the illustrated example of FIG. 4, not according to the invention, example non-sintered material 420 is positioned within the disk cavity 406, the first shaft cavity 408, and the second shaft cavity 410 of the single-piece valve body 402. The non-sintered material 420 supports (e.g., provides a base and/or lateral support for) the formation of the disk 412, the first shaft 414, the second shaft 416, and/or the single-piece disk-shaft member 404 in the single-piece valve body 402. The non-sintered material 420 is removable from the disk cavity 406, the first shaft cavity 408, and the second shaft cavity 410 of the single-piece valve body 402 following completion of the manufacturing process utilized to fabricate the butterfly valve 400 of FIG. 4.

In the illustrated example of FIG. 4, not according to the invention, the butterfly valve 400 (e.g., the single-piece valve body 402, the single-piece disk-shaft member 404, and the non-sintered material 420) is formed and/or fabricated via one or more additive manufacturing process(es). For example, the butterfly valve 400 may be formed utilizing a selective laser sintering (SLS) process and/or a hybrid directed energy deposition process. Additive manufacturing enables the single-piece disk-shaft member 404 of FIG. 4 to be formed such that the single-piece disk-shaft member 404 is irremovably located within the single-piece valve body 402 of FIG. 4. Positioning the single-piece disk-shaft member 404 in this manner would be prohibitively difficult, if not impossible, via conventional fabrication processes such as milling, molding, casting, etc.

Recent advancements in additive manufacturing enable the deposition of multiple, different materials during a single build and/or print of the manufacturing process. For example, the single-piece valve body 402 and the single-piece disk-shaft member 404 may be formed via different materials. In some examples, not according to the invention, the use of multi-material additive manufacturing enables the non-sintered material 420 described above to be removably positioned in the disk cavity 406, the first shaft cavity 408, and the second shaft cavity 410 of the single-piece valve body 402 to support the disk 412, the first shaft 414, the second shaft 416, and/or the single-piece disk-shaft member 404 during the fabrication of the butterfly valve 400. In such examples, the non-sintered material 420, although not bonded to any other portion of the butterfly valve 400, nonetheless provides support for the formation of the disk 412, the first shaft 414, the second shaft 416, and/or the single-piece disk-shaft member 404, and may thereafter be removed (e.g., via the disk cavity 406, the first shaft cavity 408 and/or the second shaft cavity 410 of FIG. 4) from the single-piece valve body 402 upon completion of the additive manufacturing process.

From the foregoing, it will be appreciated that the disclosed control valves having one or more integral trim component(s) provide numerous advantages over conventional control valves having individual trim components. Implementation of a control valve having one or more integral trim component(s) reduces the number of individual trim components to be inserted into the body of the valve during the valve assembly process. For example, implementation of a control valve having a single-piece valve body including an integral seat and an integral bonnet advantageously eliminates the need for an individual seat ring, an individual seat ring gasket, an individual bonnet, an individual spiral wound gasket, an individual shim gasket and an individual bonnet gasket in the control valve.

Reducing the number of individual trim components to be inserted and assembled into the body of a valve advantageously reduces the variability associated with the manufacturing and assembly processes of the valve, reduces the extent of time associated with the manufacturing and assembly processes of the valve, and provides for a more robust valve. Reducing the number of individual trim components to be inserted and assembled into the body of the valve also advantageously reduces the number of joints present in the valve, and accordingly reduces the number of leakage paths of the valve. Reducing the number of individual trim components to be inserted and assembled into the body of the valve also advantageously reduces the number of serviceable components of the valve, thereby reducing the possibility that at least one serviceable component of the valve will require servicing during the lifetime of the valve.

The aforementioned advantages and/or benefits are achieved via the disclosed control valves having an integral trim. According to the invention, the control valve comprises a single-piece valve body including an integral seat and further comprises a plug irremovably located within the single-piece valve body.

According to the invention, the control valve further comprises a stem integrally formed with the plug as a single-piece plug-stem member. Further, a portion of the stem is to protrude externally from the single-piece valve body. The single-piece plug-stem member is moveable relative to the integral seat. The plug of the single-piece plug-stem member is to mate with the integral seat to close a fluid pathway located within the single-piece valve body. The plug of the single-piece plug-stem member is shaped to control a flow of a fluid passing through the fluid pathway.

In some disclosed examples, the single-piece valve body further includes an integral bonnet having a cavity. In some disclosed examples, the cavity of the integral bonnet is to receive a stem integrally formed with the plug as a single-piece plug-stem member. In some disclosed examples, a portion of the stem is to protrude externally from the cavity of the integral bonnet.

According to the invention, the control valve comprises a breakable support integrally formed with the plug and the single-piece valve body. In some disclosed examples, the breakable support is to removably couple the plug to the single-piece valve body. In some disclosed examples, the breakable support is separable from the plug and the single-piece valve body. In some disclosed examples, the breakable support is removable from the single-piece valve body upon the breakable support being separated from the plug and the single-piece valve body.

Not according to the invention, in some examples, the apparatus further comprises non-sintered material to support the plug within the single-piece valve body. Not according to the invention, in some examples, the non-sintered material is removable from the single-piece valve body

In some disclosed examples, the apparatus further comprises a hardened surface layer integrally formed on an underlying surface. In some disclosed examples, the underlying surface is formed of a first material having a first hardness value. In some disclosed examples, the hardened surface layer is formed of a second material having a second hardness value that exceeds the first hardness value. In some disclosed examples, the underlying surface is at least one of an interior wall surface of the single-piece valve body, a surface of the integral seat, and a surface of the plug.

According to the in invention, a method comprises forming a single-piece valve body and a plug via an additive manufacturing process. Further, the single-piece valve body includes an integral seat. The plug is irremovably located within the single-piece valve body. In some disclosed examples, the single-piece valve body formed via the additive manufacturing process further includes an integral bonnet.

According to the invention, the method further comprises forming a single-piece plug-stem member via the additive manufacturing process. In some disclosed examples, the single-piece plug-stem member includes a stem integrally formed with the plug.

According to the invention, the method further comprises forming a breakable support via the additive manufacturing process. Further, the breakable support is integrally formed with the plug and the single-piece valve body. In some disclosed examples, the breakable support is to removably couple the plug to the single-piece valve body.

In some examples, not according to the invention, the method further comprises positioning non-sintered material in the single-piece valve body via the additive manufacturing process. In some disclosed examples, the non-sintered material is to support the plug within the single-piece valve body. In some examples, not according to the invention, the non-sintered material is removable from the single-piece valve body.

In some disclosed examples, the method further comprises forming a hardened surface layer via the additive manufacturing process. In some disclosed examples, the hardened surface layer is integrally formed on an underlying surface. In some disclosed examples, the underlying surface is formed of a first material having a first hardness value. In some disclosed examples, the hardened surface layer is formed of a second material having a second hardness value that exceeds the first hardness value. In some disclosed examples, the underlying surface is at least one of an interior wall surface of the single-piece valve body, a surface of the integral seat, and a surface of the plug.

## Claims

1. A control valve (200) with an integral trim, the control valve (200) comprising:
a single-piece valve body (202, 302) including an integral seat (204, 304);
a plug (218, 318) irremovably located within the single-piece valve body (202, 302);
a stem (220, 320) integrally formed with the plug as a single-piece plug-stem member (222, 322),
wherein a portion of the stem (220, 320) protrudes externally from the single-piece valve body (202, 302), and
wherein the single-piece plug-stem member (222, 322) is moveable relative to the integral seat (204, 304), the plug (218, 318) of the single-piece plug-stem member (222, 322) to mate with the integral seat (204, 304) to close a fluid pathway (216, 316) located within the single-piece valve body (202, 302),
**characterized in that**,
a breakable support (228) is integrally formed with the plug and the single-piece valve body (202, 302).

2. The control valve (200) of claim 1, wherein the plug (218, 318) of the single-piece plug-stem member (222, 322) is shaped to control a flow of a fluid passing through the fluid pathway.

3. The control valve (200) of claim 1, wherein the single-piece valve body further includes an integral bonnet (206, 306) having a cavity (212, 312) to receive the stem (220, 320), wherein a portion of the stem (220, 320) protrudes externally from the cavity (212, 312) of the integral bonnet (206, 306).

4. The control valve (200) of any preceding claim, wherein the breakable support (228) is separable from the plug (218, 318) and the single-piece valve body (202, 302), the breakable support (228) being removable from the single-piece valve body (202, 302) upon the breakable support (228) being separated from the plug (218, 318) and the single-piece valve body (202, 302).

5. The control valve (200) of any preceding claim, further comprising non-sintered material (328) to support the plug (218, 318) within the single-piece valve body (202, 302), the non-sintered material (328) being removable from the single-piece valve body (202, 302).

6. The control valve (200) of any preceding claim, further comprising a hardened surface layer (330) integrally formed on an underlying surface, the underlying surface formed of a first material having a first hardness value, the hardened surface layer formed of a second material having a second hardness value that exceeds the first hardness value, the underlying surface being at least one of an interior wall surface of the single-piece valve body (202, 302), a surface of the integral seat (204, 304), and a surface of the plug (218, 318).

7. The control valve (200) of claim 1, wherein the breakable support (228) is configured to removably couple the plug (218, 318) to the single-piece valve body (202, 302).

8. A method of manufacturing a control valve (200) with an integral trim, the method comprising:
forming a single-piece valve body (202, 302) and a plug (218, 318) via an additive manufacturing process, the single-piece valve body including an integral seat (204, 304), the plug (218, 318) being irremovably located within the single-piece valve body (202, 302);
forming a breakable support (228) via the additive manufacturing process, the breakable support (228) being integrally formed with the plug and the single-piece valve body (202, 302) and
forming a single-piece plug-stem member (222, 322) via the additive manufacturing process,
wherein the single-piece plug-stem member (222, 322) includes the plug and a stem (220, 320) integrally formed with the plug (218, 318), wherein a portion of the stem (220, 320) protrudes externally from the single-piece valve body (202, 302), and
wherein the single-piece plug-stem member (222, 322) is moveable relative to the integral seat (204, 304), the plug (218, 318) of the single-piece plug-stem member (222, 322) to mate with the integral seat (204, 304) to close a fluid pathway (216, 316) located within the single-piece valve body (202, 302).

9. The method of claim 8, wherein the single-piece valve body (202, 302) formed via the additive manufacturing process further includes an integral bonnet (206, 306).

10. The method of any preceding claim 8 or 9, further comprising forming a hardened surface layer (330) via the additive manufacturing process, the hardened surface layer being integrally formed on an underlying surface, the underlying surface formed of a first material having a first hardness value, the hardened surface layer formed of a second material having a second hardness value that exceeds the first hardness value, the underlying surface being at least one of an interior wall surface of the single-piece valve body (202, 302), a surface of the integral seat (204, 304), and a surface of the plug (218, 318).

11. The method of claim 8, wherein the single-piece valve body (202, 302) further includes an integral bonnet (206, 306) having a cavity (212, 312), wherein the cavity receives the stem (220, 320) integrally formed with the plug as the single-piece plug-stem member (222, 322), and wherein a portion of the stem (220, 320) protrudes externally from the cavity (212, 312) of the integral bonnet (206, 306).

12. The method of claim 8, wherein the breakable support (228) removably couples the plug (218, 318) to the single-piece valve body (202, 302).

## Patentansprüche

1. Steuerventil (200) mit einer integralen Garnitur, wobei das Steuerventil (200) umfasst:
einen einteiligen Ventilkörper (202, 302), der einen integralen Sitz (204, 304) umfasst;
einen Stopfen (218, 318), der innerhalb des einteiligen Ventilkörpers (202, 302) unentfernbar angeordnet ist;
einen Schaft (220, 320), der mit dem Stopfen als einteiliges Stopfen-Schaft-Stück (222, 322) integral ausgebildet ist,
worin ein Abschnitt des Schaftes (220, 320) nach außen aus dem einteiligen Ventilkörper (202, 302) hervorsteht, und
worin das einteilige Stopfen-Schaft-Stück (222, 322) relativ zum integralen Sitz (204, 304) beweglich ist, der Stopfen (218, 318) des einteiligen Stopfen-Schaft-Stückes (222, 322) zum integralen Sitz (204, 304) passen soll, um einen Fluidpfad (216, 316) zu schließen, der innerhalb des einteiligen Ventilkörpers (202, 302) angeordnet ist,
**dadurch gekennzeichnet, dass**
eine brechbare Stütze (228) mit dem Stopfen und dem einteiligen Ventilkörper (202, 302) integral ausgebildet ist.

2. Steuerventil (200) nach Anspruch 1, worin der Stopfen (218, 318) des einteiligen Stopfen-Schaft-Stückes (222, 322) so geformt ist, um einen Strom eines Fluids zu steuern, das den Fluidpfad (216, 316) durchströmt.

3. Steuerventil (200) nach Anspruch 1, worin der einteilige Ventilkörper ferner eine integrale Haube (206, 306) umfasst, die einen Hohlraum (212, 312) zur Aufnahme des Schaftes (220, 320) aufweist, worin ein Abschnitt des Schaftes (220, 320) nach außen aus dem Hohlraum (212, 312) der integralen Haube (206, 306) hervorsteht.

4. Steuerventil (200) nach einem der vorhergehenden Ansprüche, worin die brechbare Stütze (228) von dem Stopfen (218, 318) und von dem einteiligen Ventilkörper (202, 302) trennbar ist, wobei die brechbare Stütze (228) von dem einteiligen Ventilkörper (202, 302) entfernbar ist, indem die brechbare Stütze (228) von dem Stopfen (218, 318) und von dem einteiligen Ventilkörper (202, 302) getrennt wird.

5. Steuerventil (200) nach einem der vorhergehenden Ansprüche, ferner umfassend nicht-gesintertes Material (328), um den Stopfen (218, 318) innerhalb des einteiligen Ventilkörpers (202, 302) zu stützen, wobei das nicht-gesinterte Material (328) von dem einteiligen Ventilkörper (202, 302) entfernbar ist.

6. Steuerventil (200) nach einem der vorhergehenden Ansprüche, ferner umfassend eine gehärtete Oberflächenschicht (330), die auf einer darunterliegenden Oberfläche integral ausgebildet ist, wobei die darunterliegende Oberfläche aus einem ersten Material gebildet ist, das einen ersten Härtewert aufweist, die gehärtete Oberflächenschicht aus einem zweiten Material gebildet ist, das einen zweiten Härtewert aufweist, der den ersten Härtewert überschreitet, wobei die darunterliegende Oberfläche zumindest eine von einer Innenwandfläche des einteiligen Ventilkörpers (202, 302), einer Oberfläche des integralen Sitzes (204, 304) und einer Oberfläche des Stopfens (218, 318) ist.

7. Steuerventil (200) nach Anspruch 1, worin die brechbare Stütze (228) dafür ausgelegt ist, den Stopfen (218, 318) mit dem einteiligen Ventilkörper (202, 302) entfernbar zu koppeln.

8. Verfahren zur Herstellung eines Steuerventils (200) mit einer integralen Garnitur, wobei das Verfahren umfasst:
Ausbilden eines einteiligen Ventilkörpers (202, 302) und eines Stopfens (218, 318) durch ein additives Fertigungsverfahren, wobei der einteilige Ventilkörper einen integralen Sitz (204, 304) umfasst, der Stopfen (218, 318) innerhalb des einteiligen Ventilkörpers (202, 302) unentfernbar angeordnet ist;
Ausbilden einer brechbaren Stütze (228) durch das additive Fertigungsverfahren, wobei die brechbare Stütze (228) mit dem Stopfen und dem einteiligen Ventilkörper (202, 302) integral ausgebildet ist, und
Ausbilden eines einteiligen Stopfen-Schaft-Stückes (222, 322) durch das additive Fertigungsverfahren,
worin das einteilige Stopfen-Schaft-Stück (222, 322) den Stopfen und einen Schaft (220, 320) umfasst, der mit dem Stopfen (218, 318) integral ausgebildet ist, worin ein Abschnitt des Schaftes (220, 320) nach außen aus dem einteiligen Ventilkörper (202, 302) hervorsteht, und
worin das einteilige Stopfen-Schaft-Stück (222, 322) relativ zum integralen Sitz (204, 304) beweglich ist, der Stopfen (218, 318) des einteiligen Stopfen-Schaft-Stückes (222, 322) zum integralen Sitz (204, 304) passen soll, um einen Fluidpfad (216, 316) zu schließen, der innerhalb des einteiligen Ventilkörpers (202, 302) angeordnet ist.

9. Verfahren nach Anspruch 8, worin der einteilige Ventilkörper (202, 302), der durch das additive Fertigungsverfahren ausgebildet wird, ferner eine integrale Haube (206, 306) umfasst.

10. Verfahren nach einem der vorhergehenden Ansprüche 8 oder 9, ferner umfassend das Ausbilden einer gehärteten Oberflächenschicht (330) durch das additive Fertigungsverfahren, wobei die gehärtete Oberflächenschicht auf einer darunterliegenden Oberfläche integral ausgebildet ist, wobei die darunterliegende Oberfläche aus einem ersten Material gebildet ist, das einen ersten Härtewert aufweist, die gehärtete Oberflächenschicht aus einem zweiten Material gebildet ist, das einen zweiten Härtewert aufweist, der den ersten Härtewert überschreitet, wobei die darunterliegende Oberfläche zumindest eine von einer Innenwandfläche des einteiligen Ventilkörpers (202, 302), einer Oberfläche des integralen Sitzes (204, 304) und einer Oberfläche des Stopfens (218, 318) ist.

11. Verfahren nach Anspruch 8, worin der einteilige Ventilkörper (202, 302) ferner eine integrale Haube (206, 306) umfasst, die einen Hohlraum (212, 312) aufweist, worin der Hohlraum (212, 312) den Schaft (220, 320) aufnimmt, der mit dem Stopfen als das einteilige Stopfen-Schaft-Stück (222, 322) integral ausgebildet ist, und worin ein Abschnitt des Schaftes (220, 320) nach außen aus dem Hohlraum (212, 312) der integralen Haube (206, 306) hervorsteht.

12. Verfahren nach Anspruch 8, worin die brechbare Stütze (228) den Stopfen (218, 318) mit dem einteiligen Ventilkörper (202, 302) entfernbar koppelt.

## Revendications

1. Soupape de commande (200) à une garniture intégrale, la soupape de commande (200) comprenant :
un corps de soupape monobloc (202, 302) incluant un siège intégral (204, 304);
un bouchon (218, 318) positionné de manière inamovible à l'intérieur du corps de soupape monobloc (202, 302) ;
une tige (220, 320) formée d'un seul tenant avec le bouchon sous la forme d'un élément de tige-bouchon monobloc (222, 322),
dans laquelle une partie de la tige (220, 320) fait saillie à l'extérieur du corps de soupape monobloc (202, 302), et
dans laquelle l'élément de tige-bouchon monobloc (222, 322) est mobile par rapport au siège intégral (204, 304), le bouchon (218, 318) de l'élément de tige-bouchon monobloc (222, 322) étant destiné à s'apparier avec le siège intégral (204, 304) pour fermer un trajet de fluide (216, 316) situé à l'intérieur du corps de soupape monobloc (202, 302),
**caractérisée en ce que**,
un support cassable (228) est formé d'un seul tenant avec le bouchon et le corps de soupape monobloc (202, 302).

2. Soupape de commande (200) selon la revendication 1, dans laquelle le bouchon (218, 318) de l'élément de tige-bouchon monobloc (222, 322) est formé pour commander un écoulement d'un fluide passant à travers le trajet de fluide.

3. Soupape de commande (200) selon la revendication 1, dans laquelle le corps de soupape monobloc comprend en outre un capot intégral (206, 306) présentant une cavité (212, 312) pour recevoir la tige (220, 320), dans laquelle une partie de la tige (220, 320) fait saillie à l'extérieur depuis la cavité (212, 312) du capot intégral (206, 306).

4. Soupape de commande (200) selon l'une quelconque des revendications précédentes, dans laquelle le support cassable (228) peut être séparé du bouchon (218, 318) et du corps de soupape monobloc (202, 302), le support cassable (228) pouvant être retiré du corps de soupape monobloc (202, 302) lorsque le support cassable (228) est séparé du bouchon (218, 318) et du corps de soupape monobloc (202, 302).

5. Soupape de commande (200) selon l'une quelconque des revendications précédentes, comprenant en outre un matériau non fritté (328) pour supporter le bouchon (218, 318) à l'intérieur du corps de soupape monobloc (202, 302), le matériau non fritté (328) pouvant être enlevé du corps de soupape monobloc (202, 302).

6. Soupape de commande (200) selon l'une quelconque des revendications précédentes, comprenant en outre une couche de surface durcie (330) formée d'un seul tenant sur une surface sous-jacente, la surface sous-jacente étant formée d'un premier matériau présentant une première valeur de dureté, la couche de surface durcie étant formée d'un second matériau présentant une seconde valeur de dureté qui dépasse la première valeur de dureté, la surface sous-jacente étant au moins l'une d'une surface de paroi intérieure du corps de soupape monobloc (202, 302), d'une surface du siège intégral (204, 304) et d'une surface du bouchon (218, 318).

7. Soupape de commande (200) selon la revendication 1, dans laquelle le support cassable (228) est configuré pour coupler de manière amovible le bouchon (218, 318) au corps de soupape monobloc (202, 302).

8. Procédé de fabrication d'une soupape de commande (200) avec une garniture intégrale, le procédé comprenant les étapes consistant à :
former un corps de soupape monobloc (202, 302) et un bouchon (218, 318) via un procédé de fabrication additive, le corps de soupape monobloc comprenant un siège intégral (204, 304), le bouchon (218, 318) étant positionné de manière inamovible à l'intérieur du corps de soupape monobloc (202, 302) ;
former un support cassable (228) via le procédé de fabrication additive, le support cassable (228) étant formé d'un seul tenant avec le bouchon et le corps de soupape monobloc (202, 302) et
former un élément de tige-bouchon monobloc (222, 322) via le procédé de fabrication additive,
dans lequel l'élément de tige-bouchon monobloc (222, 322) comprend le bouchon et une tige (220, 320) formée d'un seul tenant avec le bouchon (218, 318), dans lequel une partie de la tige (220, 320) fait saillie à l'extérieur du corps de soupape monobloc (202, 302), et
dans lequel l'élément de tige-bouchon monobloc (222, 322) est mobile par rapport au siège intégral (204, 304), le bouchon (218, 318) de l'élément de tige-bouchon monobloc (222, 322) étant destiné à s'apparier avec le siège intégral (204, 304) pour fermer un trajet de fluide (216, 316) situé à l'intérieur du corps de soupape monobloc (202, 302).

9. Procédé selon la revendication 8, dans lequel le corps de soupape monobloc (202, 302) formé via le procédé de fabrication additive comprend en outre un capot intégral (206, 306).

10. Procédé selon l'une quelconque des revendications 8 ou 9, comprenant en outre la formation d'une couche de surface durcie (330) via le procédé de fabrication additive, la couche de surface durcie étant formée d'un seul tenant sur une surface sous-jacente, la surface sous-jacente formée d'un premier matériau présentant une première valeur de dureté, la couche de surface durcie formée d'un second matériau présentant une seconde valeur de dureté qui dépasse la première valeur de dureté, la surface sous-jacente étant au moins l'une d'une surface de paroi intérieure du corps de soupape monobloc (202, 302), d'une surface du siège intégral (204, 304) et d'une surface du bouchon (218, 318).

11. Procédé selon la revendication 8, dans lequel le corps de soupape monobloc (202, 302) comprend en outre un capot intégral (206, 306) présentant une cavité (212, 312), dans lequel la cavité reçoit la tige (220, 320) formée d'un seul tenant avec le bouchon en tant qu'élément de tige-bouchon monobloc (222, 322), et dans lequel une partie de la tige (220, 320) fait saillie à l'extérieur de la cavité (212, 312) du capot intégral (206, 306).

12. Procédé selon la revendication 8, dans lequel le support cassable (228) couple de manière amovible le bouchon (218, 318) au corps de soupape monobloc (202, 302).
